Europäisches Patentamt

European Patent Office

Office européen des brevets

(11) Veröffentlichungsnummer : **0 142 039**
**B1**

(12) **EUROPÄISCHE PATENTSCHRIFT**

(45) Veröffentlichungstag der Patentschrift :
**15.03.89**

(21) Anmeldenummer : **84112294.8**

(22) Anmeldetag : **12.10.84**

(51) Int. Cl.⁴ : **E 05 F 15/14**

(54) Vorrichtung zum automatischen Öffnen und Schliessen von Schiebetüren.

(30) Priorität : **09.11.83 DE 3340557**

(43) Veröffentlichungstag der Anmeldung :
**22.05.85 Patentblatt 85/21**

(45) Bekanntmachung des Hinweises auf die Patenterteilung : **15.03.89 Patentblatt 89/11**

(84) Benannte Vertragsstaaten :
**AT BE CH DE FR GB IT LI LU NL SE**

(56) Entgegenhaltungen :
**CH--A-- 601 628
DE--A-- 2 405 281
DE--A-- 3 202 898
FR--A-- 1 465 083
FR--A-- 2 181 146
FR--A-- 2 217 511**

(73) Patentinhaber : **Landert-Motoren-AG
CH-8180 Bülach (CH)**

(72) Erfinder : **Landert, Heinrich, Dipl. Ing.
Am Fasnachtbuck 24
CH-8180 Bülach (CH)**
Erfinder : **Radau, Wolfgang, Ing. Grad.
Frohaldenstrasse 77
CH-8180 Bülach (CH)**

(74) Vertreter : **Riebling, Peter, Dr.-Ing.
Patentanwälte Dr.-Ing., Dipl.-Ing., Ing.(grad.) Günter
Riebling Dr.-Ing., Dipl.-Ing. Peter Riebling Rennerle
10 Postfach 3160
D-8990 Lindau (DE)**

EP 0 142 039 B1

Jouve, 18, rue St-Denis, 75001 Paris, France

**Beschreibung**

Die Erfindung betrifft eine Vorrichtung nach dem Oberbegriff des Patentanspruches 1.

Eine derartige Vorrichtung ist bereits aus der DE-A-2 405 281 bekannt. Diese Lösung weist aber große Außenabmessungen auf, die eine elegante, ästhetisch schöne Installation beeinträchtigt. Bei der bekannten Vorrichtung weist der Motor insgesamt drei Wicklungen auf, die mit dem Drehstromnetz verbunden sind, wobei an sich bekannte Wicklungen mit relativ groß ausgebildeten Wickelköpfen verwendet werden. Hierdurch ist der Motor aber in seinen Abmessungen relativ groß und weiterhin in der Anschaffung teuer. Kleiner bauende Vorrichtungen sind aufwendiger, wie pneumatische Antriebe mit extern angeordneten Kompressoreinheiten oder elektrische Antriebe mit aufwendigen Winkelgetrieben.

Gerade im Privat- und Behindertenbereich, aber auch in Ladengeschäften, Spitälern usw. bieten Antriebssysteme mit kleinen Abmessungen wesentliche Vorteile bei der Unterbringung und Installation.

Aufgabe der Erfindung ist es, einen einfachen und preisgünstigen Schiebetürenantrieb zu schaffen, der möglichst wenig Verschleißteile besitzt und kleinste Einbaumaße aufweist.

Die Lösung der Aufgabe nach der Erfindung erfolgt durch, die im kennzeichnenden Teil des Patentanspruchs 1 angegebenen Merkmale.

Wichtig ist also, daß die Motoreinheit auf einfache Art sehr kompakt und vor allem flach gebaut ist und somit die Abmessungen der ganzen Vorrichtung klein gehalten werden können.

Die Vorrichtung nach der Erfindung besteht also aus einem Ringwickelmotor spezieller Bauart und annähernd proportionaler Drehmoment/Drehzahl-Kennlinie, einem Zahnriemenvorgelege zur Drehzahlreduktion, einem Keilriemen, an den der oder die Laufwagen gekuppelt werden, einem am Laufwagen befestigten Hydraulikdämpfer zur Abdämpfung der Türbewegung in den Endlagen, elektronische Steuermittel zur Steuerung der Vorrichtung. Alle beschriebenen Funktionskomponenten sind in einem selbsttragenden, extrudierten Aluminiumprofil mit Klemmverschlüssen angeordnet.

Die bisher verwendeten Elektromotoren waren zwar ebenfalls als Asynchron-Wechselstrommotoren ausgebildet, bisher war es aber nicht bekannt und naheliegend, einen Motor mit einer Ringwicklung zu verwenden. Bei einer solchen Ringwicklung fehlen die die Baulänge des Motors bestimmenden Wicklungsköpfe, so daß der Motor erfindungsgemäss wesentlich kleiner gebaut werden kann.

Bei der erfindungsgemässen Verwendung eines Asynchron-Wechselstrommotors in Kurzschlußläufer-Ausführung im Einphasenbetrieb ergibt sich der weitere Vorteil, daß ein solcher Ringwickelmotor eine Drehfeld-Charakteristik aufweist. Dies führt dazu, daß bei hohem Gegendrehmoment der Motor stehenbleibt, was zu wichtigen Vorteilen bei der Verwirklichung des Erfindungsgedankens führt.

Dadurch, daß der Motor die beschriebene Bauweise hat, und nach dem Gegenstand des Anspruches 2 auf ein Zugmittelgetriebe wirkt, ergibt sich der Vorteil, daß eine Rückwirkung von der Tür auf den Motorantrieb möglich ist. Fährt die Tür unter Motorantrieb an ihren Endanschlag, dann bedarf es keiner elektrischen Endschalter, welche den Strom vom Motor abschalten würden. Der Motor bleibt vielmehr einfach stehen und die Gegeninduktion im Rotor ist so groß gehalten, daß der hieraus entstehende Kurzschlußstrom klein ist, so daß nur eine ganz geringe Erwärmung des Motors die Folge ist. Durch die erfindungsgemässe Wahl der Art des Motors können also die vorher bekannten, aufwendigen und relativ reparaturanfälligen elektrischen Endschalter entfallen.

Dadurch, daß der Motor über ein Zugmittelgetriebe wirkt, welches eine Rückwirkung von der Tür auf den Motor ermöglicht, ergibt sich der weitere Vorteil, daß im Falle eines Stromausfalles die Tür im mit dem Motor gekuppelten Zustand trotzdem noch leicht verschoben werden kann. Die bisher bekannten Antriebsaggregate verwenden einen Motor mit einem Untersetzungsgetriebe, was in der Regel als Schneckengetriebe ausgebildet ist. Hierbei besteht der Nachteil, daß eine Rückwirkung von der Tür auf den Motor nicht möglich ist. Bei einem Stromausfall muß jedoch die Tür nach wie vor geöffnet werden können. Hierzu sind dann in bekannter Weise aufwendige elektromagnetische Kupplungen zwischen dem Motor und der Tür angeordnet, um im Falle eines Stromausfalles die Kupplung zu öffnen und die Tür vom Antrieb zu trennen, so daß sie leicht vonhand verschoben werden kann.

Diese Nachteile werden alle mit der Ausführung nach der Erfindung vermieden.

Durch die Verwendung eines Ringwickelmotors mit einer relativ niedrigen Drehzahl von etwa 400 Umdrehungen pro Minute hat der Rotor des Motors nur eine sehr geringe Schwungenergie, und die damit betriebenen Türen laufen leicht und ohne große Schwungmasse, so daß auch die Endlagenbegrenzungen relativ klein dimensioniert werden können.

Zur erwähnten, kleinen Bauweise des gesamten Antriebs trägt noch der Gegenstand des Anspruches 6 bei, der beansprucht, daß bei zwei entgegengesetzt angetriebenen Türflügeln die dem einen Laufwagen zugeordnete Mitnehmerstange am hinlaufenden Teil des Keilriemens und die dem anderen Laufwagen zugeordnete Mitnehmerstange am herlaufenden Teil des Keilriemens befestigt ist und daß die Mitnehmerstangen einander übergreifen.

Durch die beschriebene Übergreifung (Überlappung) der Mitnehmerstangen kann die Baulänge des Keilriemens kurz gewählt werden, obwohl große Öffnungswege möglich sind.

Alle beschriebenen Faktoren tragen dazu bei, daß die gesamten Außenabmessungen eines Tragprofils, welches den erfindungsgemässen Antrieb aufnimmt, nunmehr lediglich 200 × 105 mm betragen, während übliche Antriebe Außenabmessungen von etwa 200 × 250 mm im Querschnitt aufweisen. Es werden hierbei Tragprofil-Längen von etwa 4 bis 6 m verwendet. Die angegebenen Größenabmessungen sollen jedoch nicht beschränkend für die vorliegende Erfindung verstanden werden.

Weitere Merkmale der Erfindung Gegenstand der übrigen Patentansprüche.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen :

Figur 1 : Draufsicht auf eine Vorrichtung nach der Erfindung,

Figur 2 : Schnitt gemäss der Linie A-A in Figur 1,

Figur 3 : Schnitt gemäss der Linie B-B in Figur 1,

Figur 4 : Schnitt gemäss der Linie C-C in Figur 1,

Figur 5 : vergrößerte Darstellung der Motoreinheit und des Vorgeleges in der Draufsicht.

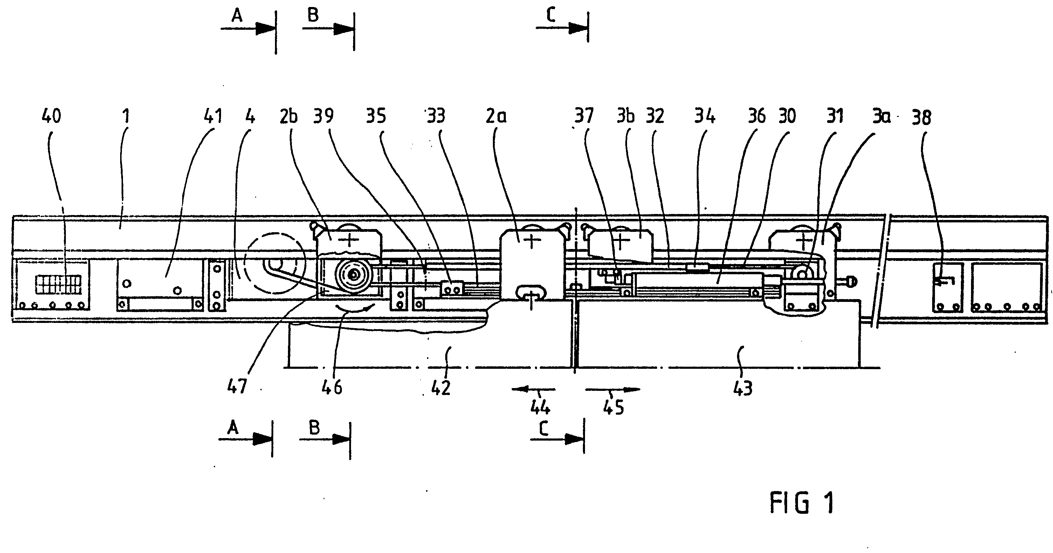

In Figur 1 ist ein selbsttragendes Aluminiumprofil gezeigt, welches als Tragprofil den gesamten Antrieb, bestehend aus Motoreinheit 4, Vorgelege 47, Laufwagen 2, 3, elektrische Steuereinheit 39, 41, Klemmreihe 40 und Anschlag 38 aufnimmt.

Im gezeigten Ausführungsbeispiel werden zwei Türflügel 42, 43 in Pfeilrichtung 44, 45 bzw. in Gegenrichtung hierzu bewegt. Jeder Türflügel 42, 43 ist mit einem Laufwagen 2, 3 verbunden. Jeder Laufwagen 2, 3 besteht aus zwei — einen gegenseitigen Abstand aufweisenden — Laufwagen — köpfen 2a, 2b bzw. 3a, 3b, die starr miteinander über Mitnehmerstangen 32, 33 verbunden sind. Jeder Laufwagenkopf 2a, 2b bzw. 3a, 3b setzt an auseinanderliegenden Punkten an den jeweils zugeordneten Türflügeln 42, 43 an. Es sind selbstverständlich Abwandlungen des gezeichneten Ausführungsbeispieles möglich, weil mit dem nachfolgend beschriebenen Antrieb selbstverständlich auch nur ein Türflügel allein geöffnet und geschlossen werden kann.

Die Motoreinheit 4 ist im Tragprofil 1 mit Klemmverschlüssen 5 befestigt und besteht aus einem genuteten Statorpaket 6, welches mit einem Kunststoffmantel 7 aus Isolationsgründen umspritzt ist, einer Ringwicklung 8, einem Rotor 9, der auf der Welle 10 aufgepresst ist, zwei Lagerschildern 11 und 12 mit Kugellagern 13 und 14, die in die Statorbohrung des Stators 6 direkt eingesetzt sind und die über die Welle 10 mit der Schraube 15, der Scheibe 16 und der Wellfederscheibe 17 verspannt werden. Das Lagerschild 11 ist mit den Schrauben 18 am gehäusefesten Tragbügel 19 befestigt.

Jeder Laufwagenkopf weist einen abgekröpften Tragbügel 52 auf, an dessen oberem Ende drehbar eine Gegenhalterolle 48 angebracht ist, welche an der inneren Oberseite des Tragprofils 1 sich abstützt und eine Verkantung des Türflügels 42 vermeidet. Die Türlast selbst wird von einer Hauptlaufrolle 49 aufgenommen, die drehbar am Tragbügel 52 gelagert ist, und die mit einer V-förmig profilierten Lauffläche auf einer ebenso profilierten Profilschiene 50 abrollt. Die Profilschiene 50 ist in ein Gummiprofil 51 eingeclipst, welches auf einem im Tragprofil 1 abragenden Schenkel befestigt ist. Die Profilschiene 50 besteht hierbei aus einem Kunststoffmaterial. In Verbindung mit dem Gummiprofil ergibt sich hier ein praktisch geräuschloser Lauf.

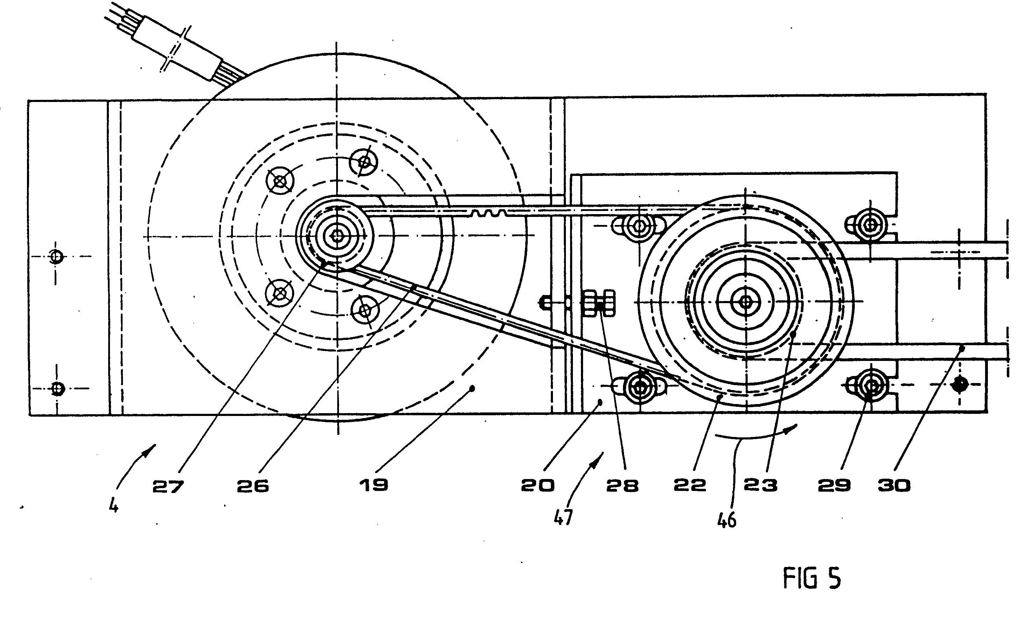

Am Tragbügel 52 ist ein Klemmstück angebracht, welches über eine in der genannten Abbildung nicht näher dargestellten Mitnehmerstange mit dem Keilriemen des Vorgeleges 47 verbunden ist. Das Vorgelege 47 zur Drehzahlreduktion (gem. Figur 5) ist ebenfalls auf einem gehäusefesten Tragbügel 19 befestigt und besteht aus einer Spannplatte 20, der Achse 21 und dem Zahnriemenrad 22, welches mit der Keilriemenscheibe 23 und der Anker 24 der Magnetbremse 25 verbunden ist. Der Zahnriemen 26 läuft über die Zahnriemenräder 22 und 27. Die Spannplatte 20 kann zur Spannung des Zahnriemens 26 mit der Stellschraube 28 verschoben werden und wird mit den Schrauben 29 festgeklemmt. Der Keilriemen 30 läuft über die Keilriemenscheibe 23 und die Umlenkrolle 31. Die Laufwagen 2 und 3 werden über die Mitnehmerstangen 32 und 33 mit dem Keilriemen 30 durch die Klemmstücke 34 und 35 verbunden. Auf der Mitnehmerstange 33 ist der einstellbare Hydraulikdämpfer 36 befestigt, der in den Türendlagen « ZU/OFFEN » auf die Anschläge 37 und 38 auffährt und die Türbewegung dämpft. Die elektronischen Steuereinheiten 39 und 41 sind im Tragprofil 1 befestigt und werden über Multistecker und Flachbandkabel mit der Klemmreihe 40 verbunden, auf der sich alle Anschlüsse für Netz, Impulsmittel (wie Radar, IR-Sensoren), Sicherheitseinrichtungen und Programmwahlschalter befinden.

Wenn sich in Figur 1 und Figur 5 die Keilriemenscheibe 23 in Pfeilrichtung 46 dreht, bewegen sich die Türflügel 42, 43 in den Pfeilrichtungen 44, 45.

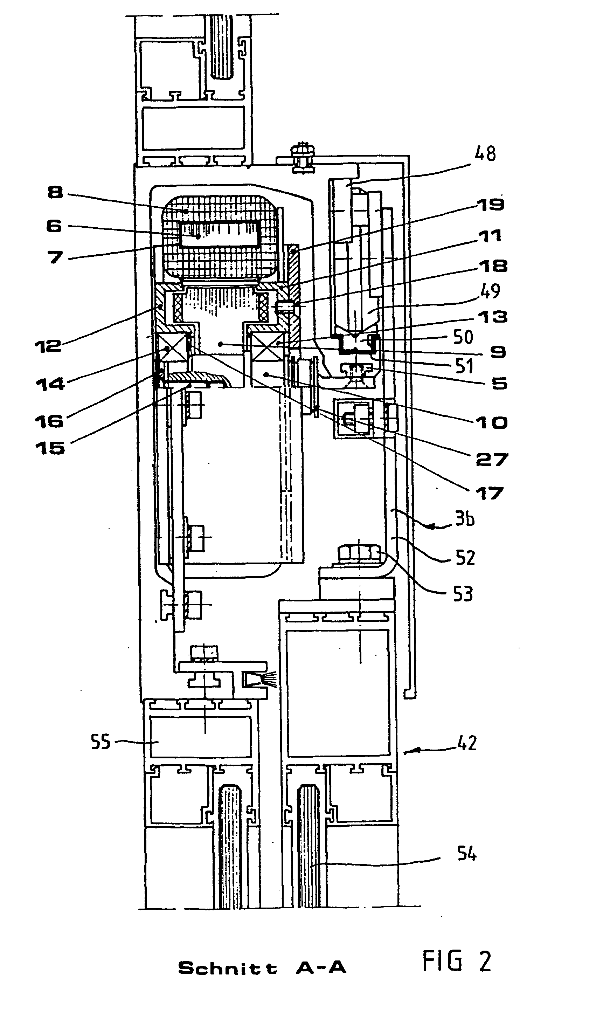

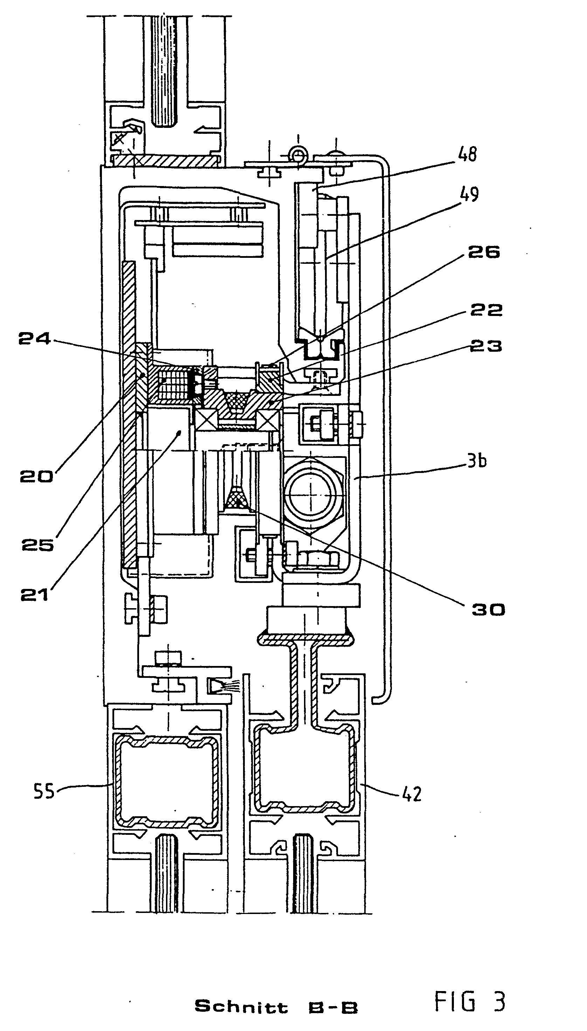

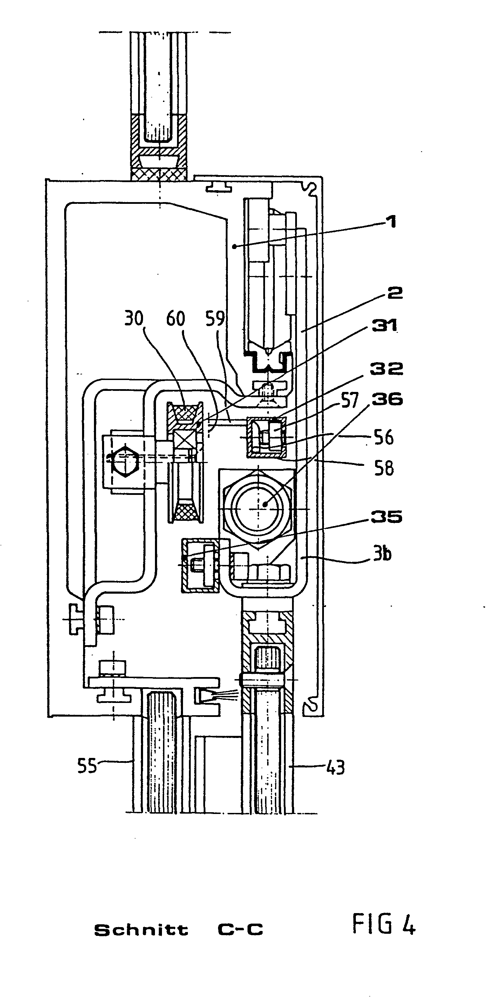

Jeder Türflügel besteht hierbei gemäss Figur 2 aus einem beweglichen Teil, der mit seinem Laufwagen 2, 3 verbunden ist, wobei sich jeder Türflügel an einem feststehenden Türflügel 55 vorbeibewegt. Im Ausführungsbeispiel nach den Figuren 2 und 3 sind die Türflügel 42, 43 mit Glasscheiben 54 ausgerüstet, während in Figur 4 eine Ganzglas-Konstruktion gezeigt ist. Die Türflügel sind hierbei mit Schrauben 53 (Fig. 2) an dem zugeordneten Laufwagen 2, 3 befestigt.

Die Verbindung einer Mitnehmerstange 32 mit dem zugeordneten Keilriemen 30 wird anhand der Figur 4 näher erläutert.

In einem C-Profil 58 ist ein Nutenstein 57 mit einer Druckschraube eingesetzt, welche auf ein Klemmstück 56 wirkt, die in dem C-Profil 58 angepresst wird. Außen am C-Profil 58 ist ein horizontal abragender Verbindungsarm 59 angeordnet, der in einem nicht näher dargestellten Klemmprofil 60 endet, welches den Keilriemen 30 umfasst und mit diesem verbunden ist.

Erhält die Antriebseinheit über einen nicht näher beschriebenen Annäherungssensor einen Öffnungsbefehl, wird die Schiebetür elektromotorisch über Motoreinheit 4, Keilriemen 30 und Laufwagen 2 und 3 geöffnet. Die Endlagendämpfung erfolgt durch den Dämpfer 36 hydraulisch. Nach Ablauf einer, an der Steuereinheit 39 einstellbaren Zeit, schließt die Türe wiederum elektromotorisch mit hydraulischer Endlagendämpfung in der ZU-Stellung. Nach Ablauf einer einstellbaren Schließzeit schaltet der Motor ab und die Magnetbremse 25 ein, so daß die Tür in der ZU-Stellung gehalten wird.

Der Aufbau der Magnetbremse 25 ist so, daß der Anker 24 über eine Ringfeder mit der Keilriemenscheibe 23 axialfedernd verbunden ist. Die Feder zieht den Anker 24 an die Keilriemenscheibe an. Wird Strom auf die Magnetbremse 25 gegeben, dann wird der Anker 24 angezogen und löst sich von der Keilriemenscheibe 23 und drückt auf die Magnetbremse 25.

Der Motor kann durch eine spezielle Auslegung unter Spannung blockiert werden, ohne daß eine Überhitzung auftritt. Es werden also keine Endschalter zum Abschalten des Motors in den Endlagen benötigt.

Damit ergibt sich der weitere Vorteil, daß eine sehr einfache Notöffnung der Tür vorgesehen werden kann. Jeder Laufwagen kann einfach mit einer Gummischnur oder einer Feder gekoppelt werden, die im geschlossenen Zustand des Türflügels gespannt ist und im geöffneten Zustand entspannt ist. Bei einem evtl. Stromausfall öffnen sich dann die Türflügel 42, 43 in den Pfeilrichtungen 44, 45 selbsttätig unter der Kraft der sich entspannenden Gummischnüre bzw. - Federn. Dieser Effekt wird dank des eine Rückwirkung auf den Motor ermöglichenden Vorgeleges 47 in Verbindung mit der geringen Schwungmasse des Rotors 9 erzielt.

Zeichnungs-Legende

1 Tragprofil
2 Laufwagen
2a Laufwagenkopf
2b Laufwagenkopf
3 Laufwagen
3a Laufwagenkopf
3b Laufwagenkopf
4 Motoreinheit
5 Klemmverschluß
6 Statorpaket
7 Kunststoffmantel
8 Ringwicklung
9 Rotor
10 Welle
11 Lagerschild
12 Lagerschild
13 Kugellager
14 Kugellager
15 Schraube
16 Scheibe
17 Wellfederscheibe
18 Schraube
19 Tragbügel
20 Spannplatte (Vorgelege)
21 Achse
22 Zahnriemenrad
23 Keilriemenscheibe
24 Anker (Magnetbremse)
25 Magnetbremse
26 Zahnriemen
27 Zahnriemenrad
28 Stellschraube
29 Schraube
30 Keilriemen
31 Umlenkrolle
32 Mitnehmerstange
33 Mitnehmerstange
34 Klemmstück
35 Klemmstück
36 Hydraulikdämpfer
37 Anschlag
38 Anschlag
39 elektr. Steuereinheit
40 Klemmreihe
41 elektr. Steuereinheit
42 Türflügel (links)
43 Türflügel (rechts)
44 Pfeilrichtung
45 Pfeilrichtung
46 Pfeilrichtung
47 Vorgelege
48 Gegenhalterolle
49 Hauptlaufrolle
50 Profilschiene
51 Gummiprofil
52 Tragbügel
53 Schraube
54 Glasscheibe
55 Türflügel (feststehend)
56 Klemmstück
57 Nutenstein
58 C-Profil
59 Verbindungsarm
60 Klemmprofil

**Patentansprüche**

1. Vorrichtung zum automatischen Öffnen und Schließen von Schiebetüren mit einem einphasigen Asynchron-Wechselstrommotor (6, 7, 8) mit Drehfeldwicklungen, der über ein Getriebe auf ein in Öffnungs- und Schließrichtung angetriebenes Zugmittel arbeitet, an dem ein oder mehrere Laufwagen (2, 3) befestigt sind, von denen jeder im Innenraum eines in Längsrichtung des Zugmittels sich erstreckenden Tragprofils (1) abrollt, wobei am jeweiligen Laufwagen ein Türflügel (42, 43) befestigt ist, dadurch gekennzeichnet, daß der Wechselstrommotor (6, 7, 8) dadurch eine extrem kurze Baulänge aufweist, daß er als einphasiger Asynchron-Wechselstrommotor mit einer Ringwicklung (8) ausgebildet ist, mit einer Drehfeld-Charakteristik und entsprechend ausgelegt, daß bei einem durch ein hohes Gegendrehmoment herbeigeführten Stillstand des Motors
die Gegeninduktion im Rotor (9) groß und der
hierdurch entstehende Kurzschlußstrom klein ist.

2. Vorrichtung nach Anspruch 1, dadurch gekennzeichnet, daß der Wechselstrommotor (6, 7,
8) auf ein Zugmittelgetriebe (Vorgelege 47) arbeitet, an dessen Ausgangsseite ein Keilriemen (30)
angeordnet ist, der über eine im Abstand angeordnete Umlenkrolle (31) läuft und an dem die Laufwagen (2, 3) für die Türflügel (42, 43) befestigt
sind.

3. Vorrichtung nach Anspruch 2, dadurch gekennzeichnet, daß das Zugmittelgetriebe (Vorgelege 47) zweistufig ist und antriebsseitig aus
einem Zahnriemenrad (22) besteht, das über einen
Zahnriemen (26) vom Wechselstrommotor (6, 7, 8)
angetrieben ist, welches drehfest mit einer Keilriemenscheibe (23) verbunden ist, die abtriebsseitig
über den Keilriemen (30) auf die Umlenkrolle (31)
arbeitet.

4. Vorrichtung nach Anspruch 2 oder 3, dadurch gekennzeichnet, daß am Zugmittelgetriebe
(Vorgelege 47) eine Magnetbremse (25) angeordnet ist.

5. Vorrichtung nach einem der Ansprüche 1 bis
4, dadurch gekennzeichnet, daß jedem der Türflügel (42, 43) jeweils ein Laufwagen (2, 3) zugeordnet ist, daß jeder Laufwagen (2, 3) aus zwei, einen
gegenseitigen Abstand aufweisenden Laufwagenköpfen (2a, 2b ; 3a, 3b) besteht, die jeweils durch
eine Mitnehmerstange (32, 33) miteinander verbunden sind, welche über jeweils ein Klemmstück
(34, 35) mit dem Keilriemen (30) verbunden ist.

6. Vorrichtung nach Anspruch 5, dadurch gekennzeichnet, daß bei zwei entgegengesetzt angetriebenen Türflügeln (42, 43) die dem einen
Laufwagen (2) zugeordnete Mitnehmerstange
(32) am hinlaufenden Teil des Keilriemens (30)
und die dem anderen Laufwagen (3) zugeordnete
Mitnehmerstange (33) am herlaufenden Teil des
Keilriemens befestigt ist und daß die Mitnehmerstangen (32) einander übergreifen.

7. Vorrichtung nach Anspruch 6, dadurch gekennzeichnet, daß an einer Mitnehmerstange (33)
ein einstellbarer Hydraulikkörper (36) befestigt
ist, der in den Türendlagen auf ortsfeste Anschläge (37, 38) auffährt.

## Claims

1. Device for the automatic opening and closing of sliding doors, comprising a single-phase
asynchronous alternating current (a. c.) motor (6,
7, 8) having rotating field windings, which acts via
a transmission on a traction means, driven in the
opening and closing directions, to which are
attached one or more carriages (2, 3) each of
which rolls along within the inner space of a
carrying section (1) extending in the longitudinal
direction of the traction means, a door panel (42,
43) being fastened to each carriage, characterised
in that the a. c. motor (6, 7, 8) has an extremely
short structural length because it is constructed
as a single-phase asynchronous a. c. motor comprising a ring winding (8) having a rotating field
characteristic and appropriately devised so that
in the event of a stoppage of the motor caused by
a high opposing torque the back induction in the
rotor (9) is great and the short-circuit current
caused thereby is small.

2. Device according to claim 1, characterised
in that the a. c. motor (6, 7, 8) operates on a
traction device transmission (gearing 47) on the
output side of which is arranged a V-belt (30)
which runs over a deflecting roller (3) arranged
with spacing and on which are fastened the
carriages (2, 3) for the door panels (42, 43).

3. Device according to claim 2, characterised
in that the traction device transmission (gearing
47) comprises two stages and on the drive side
comprises a toothed belt pulley (22) which is
driven by the a. c. motor (6, 7, 8) via a toothed belt
(26) which is connected to rotate with a toothed
belt pulley (23) which acts on the output side on
the deflector pulley (31) via the V-belt (30).

4. Device according to claim 2 or 3, characterised in that a magnetic brake (25) is arranged on
the traction transmission device (gearing (47).

5. Device according to one of claims 1 to 4,
characterised in that each of the door panels (42,
43) is associated with a respective carriage (2, 3),
that each carriage (2, 3) comprises two carriage
heads (2a, 2b ; 3a, 3b) having a mutual spacing,
which are interconnected in each case via a
driving rod (32, 33) which is joined via a respective
clamping element (34, 35) to the V-belt (30).

6. Device according to claim 5, characterised
in that in the case of contradirectionally driven
door panels (42, 43), the driving rod (32) associated with the one carriage (2) is secured to the
outwardly running part of the V-belt (30) and the
driving rod (33) associated with the other carriage
(3) is fastened on the inwardly running part of the
V-belt, and that the driving rods (32) overlap one
another.

7. Device according to claim 6, characterised
in that on a driving rod (33) is fastened an
adjustable hydraulic element (36) which at the
end positions of the door impinges against fixed
stops (37, 38).

## Revendications

1. Dispositif d'ouverture et de fermeture automatique de portes coulissantes, comportant un
moteur asynchrone monophasé à courant alternatif (6, 7, 8), qui comporte des enroulements
inducteurs de champ tournant et actionne, par
l'intermédiaire d'une transmission, un dispositif
de traction entraîné dans les directions d'ouverture et de fermeture et auquel sont fixés un ou
plusieurs chariots (2, 3), dont chacun roule dans
l'espace intérieur d'un profilé de support (1)
s'étendant dans la direction longitudinale du
dispositif de traction, un vantail de porte (42, 43)
étant fixé à un chariot respectif, caractérisé en ce que le moteur à courant alternatif (6, 7, 8) possède une longueur hors tout extrêmement courte grâce au fait qu'il est réalisé sous la forme d'un moteur asynchrone monophasé à courant alternatif comportant un enroulement en anneau (8) et présentant une caractéristique de champ tournant, et qu'il est conçu de manière que, dans le cas d'un arrêt du moteur provoqué par un couple antagoniste intense, l'induction mutuelle dans le rotor (9) soit élevée et le courant de court-circuit qui en résulte soit faible.

2. Dispositif selon la revendication 1, caractérisé en ce que le moteur à courant alternatif (6, 7, 8) actionne une transmission (réducteur de vitesse 47) du dispositif de traction, sur le côté sortie de laquelle se trouve disposée une courroie trapézoïdale (30) qui circule sur un galet de renvoi (31) situé à distance et à laquelle sont fixés les chariots (2, 3) associés aux vantaux de porte (42, 43).

3. Dispositif selon la revendication 2, caractérisé en ce que la transmission (réducteur de vitesse 47) du dispositif de traction est à deux étages et est constituée, sur le côté menant, par une roue (22) pour courroie crantée, qui est entraînée par le moteur à courant alternatif (6, 7, 8), par l'intermédiaire d'une courroie crantée (26), et qui est reliée, en étant solidaire en rotation, à une poulie (23) pour courroie trapézoïdale, agissant, sur le côté mené, sur le galet de renvoi (31), par l'intermédiaire de la courroie trapézoïdale (30).

4. Dispositif selon la revendication 2 ou 3, caractérisé en ce qu'un frein magnétique (25) est disposé sur la transmission (réducteur de vitesse 47) du dispositif de traction.

5. Dispositif selon l'une des revendications 1 à 4, caractérisé en ce qu'à chacun des vantaux de porte (42, 43), est associé respectivement un chariot (2, 3), en ce que chaque chariot (2, 3) est constitué de deux têtes (2a, 2b ; 3a, 3b) qui sont distantes l'une de l'autre et sont réunies entre elles, sur chaque chariot, par une barre d'entraînement (32, 33) qui est reliée à la courroie trapézoïdale (30) par l'intermédiaire d'un organe respectif de serrage (34, 35).

6. Dispositif selon la revendication 5, caractérisé en ce que, dans le cas de deux vantaux de porte (42, 43) entraînés en sens opposés, la barre d'entraînement (32) associée à un chariot (2) est fixée sur la partie, avançant dans un sens, de la courroie trapézoïdale (30) et la barre d'entraînement (33) associée à l'autre chariot (3) est fixée sur la partie, avançant dans l'autre sens, de la courroie trapézoïdale et en ce que les barres d'entraînement (32) se chevauchent.

7. Dispositif selon la revendication 6, caractérisé en ce qu'un organe hydraulique réglable (36), qui s'applique sur des butées fixes (37, 38) lorsque les portes sont dans leurs positions extrêmes, est fixé sur une barre d'entraînement (33).

FIG 1

A B C 40 41 1 4 2b 39 35 33 2a 37 3b 32 34 36 30 31 3a 38 47 46 42 44 45 43

1

Schnitt A-A     FIG 2

Schnitt B-B          FIG 3

Schnitt C-C          FIG 4

FIG 5